# EUROPÄISCHE PATENTSCHRIFT

(11) **EP 4 149 688 B1**
(45) Veröffentlichungstag und Bekanntmachung des Hinweises auf die Patenterteilung: **01.07.2026**
(21) Anmeldenummer: 21726037.1
(22) Anmeldetag: 10.05.2021
(51) Int. Cl.: B02C 23/18

(54) **VERFAHREN ZUR STAUBNIEDERHALTUNG BEI BRECHERN MIT SPRÜHEINRICHTUNGEN**
METHOD OF DUST SUPPRESSION FOR CRUSHERS WITH SPRAYING DEVICES
PROCÉDÉ DE CONTRÔLE DES POUSSIÈRES DANS DES CONCASSEURS ÉQUIPÉS DE DISPOSITIFS DE PULVÉRISATION

(30) Priorität: 13.05.2020 AT 504212020
(43) Veröffentlichungstag der Anmeldung: 22.03.2023
(73) Patentinhaber: Rubble Master HMH GmbH, 4030 Linz (AT)
(72) Erfinder: HINTERDORFER, Christian, 4293 Gutau (AT); HINTERREITER, Christian, 4593 Obergrünburg (AT)
(74) Vertreter: Hübscher & Partner Patentanwälte GmbH
(86) Internationale Anmeldenummer: PCT/AT2021/060165
(87) Internationale Veröffentlichungsnummer: WO 2021/226649

(56) Entgegenhaltungen:
- CN-U- 204 208 659
- CN-U- 209 791 618
- JP-A- 2003 170 078

## Beschreibung

### Technisches Gebiet

Die Erfindung bezieht sich auf ein Verfahren zur Staubniederhaltung bei Brechern mit Sprüheinrichtungen. Das Verfahren kann beispielsweise auch bei Sieben oder anderen Schüttgutverarbeitungsanlagen zum Einsatz kommen.

### Stand der Technik

Aus dem Stand der Technik ist es bekannt, beim Zerkleinern von Schüttgut auftretende Staubpartikel mit einem Bindemittel, beispielsweise Wasser, zu binden, wodurch eine Sedimentation der Staubpartikel begünstigt wird und eine Staubemission verringert werden kann. Hierzu weisen zum Zerkleinern des Schüttguts eingesetzte Brecher an Stellen erhöhter Staubbelastung Sprüheinrichtungen auf, welche das Bindemittel versprühen. Üblicherweise erfolgt das Versprühen des Bindemittels kontinuierlich, was jedoch zu einem teilweise unnötigen Bindemittelverbrauch führt, vor allem, wenn beim Zerkleinern des Schüttguts kaum Staub entsteht. Um daher auf die mit dem Zerkleinern von unterschiedlichem Schüttgut einhergehende variierende Staubbelastung reagieren zu können, ist es vor allem bei mobilen Brechern bekannt, die Sprüheinrichtungen manuell zu aktivieren und zu deaktivieren. Diese Aufgabe übernimmt in der Regel der Betreiber des mobilen Brechers. Nachteilig daran ist, dass die Entscheidung der Aktivierung von der subjektiven Wahrnehmung des Betreibers abhängt, der sich darüber hinaus in den Bereich der erhöhten Staubbelastung begeben muss. Ungeachtet dessen, ob ein kontinuierlicher oder manuell gesteuerter Eintrag des Bindemittels erfolgt, sind die aus dem Stand der Technik bekannten Sprüheinrichtungen über eine zentrale Bindemittelversorgung gespeist, sodass alle Sprüheinrichtungen die gleiche Menge an Bindemittel versprühen. Die manuelle Aktivierung aller Sprüheinrichtungen hat darüber hinaus den Nachteil, dass die Funktion einer optischen Erfassungseinrichtung für das Schüttgut, beispielsweise zur Brechersteuerung durch die subjektive Einschätzung des Betreibers beeinträchtigt wird. So kann es vorkommen, dass der Betreiber ein Versprühen eines Vielfaches der tatsächlich benötigten Menge an Bindemittel veranlasst, wodurch die Funktion der optischen Erfassungseinheit gestört wird. Mit einer solchen übermäßigen Bindemittelaufgabe geht außerdem das Problem einher, dass Wiegewerte des Schüttguts verfälscht werden bzw. das Schüttgut vor dem Wiegen einem Trocknungsprozess ausgesetzt werden muss. Umgekehrt kann im Falle einer Aufgabe einer zu geringen Menge an Bindemittel die optische Erfassungseinheit durch die Staubentwicklung ebenfalls gestört sein.

Aus CN204208659U ist ein Verfahren zur Staubniederhaltung bei Brechern mit einer Sprüheinrichtung bekannt. Die auf den Brechspalt ausgerichtete Sprüheinrichtung wird von einem Sensor aktiviert, wenn dieser einen Istwert erfasst, der über einem vorgegebenen Schwellwert einer Staubkonzentration liegt. Aus CN209791618 ist ein ähnliches Verfahren bekannt, wobei als Sensor ein induktiver Sensor vorgesehen ist. Nachteilig an diesen Verfahren ist der unabhängig vom tatsächlichen Bedarf hohe Bindemittelbedarf.

Aus der JP2003170078 ist ein Verfahren zur Staubniederhaltung bei Brechern bekannt. Der Brecher weist eine Sprüheinrichtung auf, welche aktiviert wird, wenn die errechnete Bildhelligkeit eines durch eine Kamera aufgenommenen Bildes über einen vorgegebenen Schwellwert liegt. Auf diese Weise kann auftretendes Feuer erkannt und gelöscht werden.

### Darstellung der Erfindung

Der Erfindung liegt somit die Aufgabe zugrunde, ein Verfahren der eingangs geschilderten Art dahingehend zu verbessern, dass unabhängig vom Betreiber auch bei heterogenem Schüttgut eine ressourcenschonende und effektive Staubniederhaltung ermöglicht werden kann.

Die Erfindung löst die gestellte Aufgabe dadurch, dass die Abweichung zwischen einem von einem ersten Sensor aufgenommenen Abbild eines in seinem Erfassungsbereich angeordneten Musters als Istwert und einem vorgegebenen Sollwert ermittelt wird, wonach beim Überschreiten der Abweichung über einen vorgegebenen Schwellwert die dem Muster zugeordneten Sprüheinrichtungen aktiviert werden. Zufolge dieser Maßnahmen können Bereiche erhöhter Staubbelastung lokalisiert werden und nur jene Sprüheinrichtungen zum Einbringen eines Bindemittels, beispielsweise Wasser, eingesetzt werden, welche dem lokalisierten Bereich zugeordnet sind und daher zum Staubniederhalten des lokalisierten Bereichs erhöhter Staubbelastung geeignet sind. Zur Lokalisierung kann im Erfassungsbereich des Sensors ein Muster vorgesehen sein. Dieses Muster wird vom Sensor aufgenommen und als Istwert abgebildet. Der Istwert wird mit einem bekannten Sollwert des Musters, welcher beispielsweise auf einer Steuereinheit hinterlegt ist, verglichen. Eine erhöhte Staubbelastung führt zu einer Veränderung des Abbilds, wodurch es zu einer Abweichung zwischen Istwert und hinterlegtem Sollwert kommt. Sobald die Abweichung einen vorgegeben Schwellwert überschreitet, wird die dem Muster zugeordnete Sprüheinrichtung aktiviert, deren abgegebenes Bindemittel die Staubpartikel benetzt und dadurch eine Sedimentation der Staubpartikel begünstigt. Gerade beim Einsatz von optischen Sensoren können als Muster die geometrische Form eines QR-Codes oder eines im Erfassungsbereich fest angeordnete Maschinenelementes eingesetzt werden, wodurch ein weitgehend von den Lichtverhältnissen im Erfassungsbereich unabhängiger Abgleich zwischen Istwert und Sollwert erfolgen kann. Ein etwaiger lichtverhältnisbedingter fehlerhafter Abgleich kann zusätzlich dadurch verhindert werden, wenn der Sollwert auf verschiedene im Erfassungsbereich zu erwartende Helligkeitsstufen angepasst werden kann. Die Anpassung kann beispielsweise in Abhängigkeit eines Lichtsensors erfolgen. Die Zuordnung zwischen einem Muster und einer Sprüheinrichtung kann in Abhängigkeit der Entfernung der verschiedenen Sprüheinrichtungen zum Muster erfolgen, sodass im Regelfall die dem Muster nächstgelegene Sprüheinrichtung und/oder die bezüglich des Schüttgutstromes vorgelagerte Sprüheinrichtung aktiviert werden. Der Sensor und die Sprüheinrichtungen können jedoch auch mit einer Steuereinheit verbunden sein, wodurch eine komplexere Regelung ermöglicht wird. So können gegebenenfalls zur Staubniederhaltung in einem besonders großen lokalisierten Bereich mehrere diesem Bereich vorgelagerte Sprüheinrichtungen aktiviert werden, um eine Beeinträchtigung des ersten Sensors in diesem Bereich zu vermeiden. Die Steuereinheit kann nach der Aktivierung des Sprüheinrichtung die Effektivität der durchgeführten Staubniederhaltung überprüfen, in dem die Größe der Abweichung nach dem Eindüsen des Bindemittels bestimmt und in Abhängigkeit dieser Abweichung die Zuordnung der Sprüheinrichtungen zu dem Muster und/oder die Menge des zudosierten Bindemittels variiert wird. Durch diese Regelung kann eine Optimierung der Staubniederhaltung erfolgen. Die Deaktivierung der Sprüheinrichtung erfolgt nach der Abgabe einer vorgegebenen Menge des Bindemittels. Die vorgegebene Menge kann beispielsweise ein fest hinterlegtes Volumen sein, oder aber in Abhängigkeit der Größe der Abweichung zwischen Ist- und Sollwert variieren. Kommt es zu einer besonders großen Überschreitung des Schwellwertes kann beispielsweise ein erhöhter Volumenstrom von der entsprechenden Sprüheinrichtung des Bindemittels vorgesehen sein. Zur Variierung des Volumenstroms können die Sprüheinrichtungen über Magnetventile verfügen.

Grundsätzlich ist es denkbar, dass jedem Muster ein optischer Sensor zugeordnet ist, was bei einer großen Anzahl an Mustern einen entsprechend hohen Kostenaufwand zur Folge hat. Um daher trotz eines konstruktiv einfachen und kostengünstigen Messaufbaus eine exakte Regelung der Staubniederhaltung zu ermöglichen, wird vorgeschlagen, dass vom ersten Sensor Abbilder von mehreren Mustern gleichzeitig erfasst werden. In diesem Fall sind im Erfassungsbereich des ersten Sensors mehrere Muster an Referenzpunkten angeordnet, wodurch eine differenzierte Zuordnung von Sprüheinrichtungen erfolgen kann, ohne dass hierfür jedem Muster ein Sensor zugeordnet sein muss. Als Sensor eignet sich hierfür beispielsweise eine Weitwinkelkamera, welche einen möglichst breiten Erfassungsbereich aufweist.

Bei der mechanischen Zerkleinerung von Schüttgut kommt es in der Regel zu einem starken Verschleiß von Maschinenelementen des Brechers. Dadurch können auch die am Brecher angeordneten Muster oder als Muster dienende Maschinenelemente abgenützt und daher verfälscht werden, wodurch es zu einem fehlerhaften Abgleich zwischen dem Istwert und dem Sollwert eines Musters kommen kann. Um daher die Regelung unabhängig von fest im Erfassungsraum angeordneten Mustern durchführen zu können, kann das Abbild des von einem zweiten Sensor aufgenommenen Musters den Sollwert bilden und die Abweichung als Anzahl der nichtkorrespondierenden Musterpunkte im Soll- und Istwert ermittelt werden. Der Sollwert ist also in diesem Fall nicht auf einer Steuereinheit fest hinterlegt, sondern wird laufend mit einem zweiten Sensor aufgenommen. Das Muster kann dabei eine Reihe von Bildpunkten umfassen, die sowohl im Abbild des ersten Sensors als auch im Abbild des zweiten Sensors identifiziert und zwischen den Abbildern als korrespondierende Musterpunkte zugeordnet werden können. Der erste und zweite Sensor müssen hierzu einen unterschiedlichen Erfassungswinkel gegenüber dem Muster aufweisen, was allerdings ohnehin dann gegeben ist, wenn beide Sensoren voneinander beabstandet sind und beide zum Aufnehmen des Abbilds auf das Muster ausgerichtet sind. Zum Identifizieren und Zuordnen der Bildpunkte können bekannte fotogrammetrische Verfahren eingesetzt werden. Daraus ergibt sich der Vorteil, dass die Muster nicht starr im Erfassungsraum der Sensoren angeordnet sein müssen, sondern beispielsweise bewegliches Schüttgut sein können. Die Sensoren zur Erkennung der Staubbelastung können demnach auch zur optischen Beurteilung des Schüttguts herangezogen werden, wodurch nicht nur eine Regelung der Staubniederhaltung, sondern des gesamten Aufbereitungsprozesses von Schüttgut, beispielsweise des Zerkleinerungsprozesses oder der Klassifizierung, ermöglicht wird. Der Vergleich des Istwerts mit dem Sollwert erfolgt dabei, in dem die Musterpunkte des Istwerts mit den korrespondierenden Punkten des Sollwerts abgeglichen werden. Ein Schwellwert der Abweichung ist in diesem Fall dann überschritten, wenn eine bestimmte Anzahl an korrespondierenden Musterpunkten nicht zugeordnet werden kann.

Besonders praktische Regelungsbedingungen ergeben sich, wenn zur Bestimmung der Abweichung zwischen Istwert und Sollwert Daten herangezogen werden, die ohnehin zur Regelung des Aufbereitungsprozesses von Schüttgut nötig sind. Solche Daten können beispielsweise Tiefendaten sein, welche zur Beurteilung der Beschaffenheit des Schüttguts, beispielsweise zur Klassifizierung von Korngrößen des Schüttguts, herangezogen werden können. Hierzu können der erste und zweite Sensor eine Stereokamera bilden. Stereokameras werden zur Erfassung von Tiefendaten des Schüttguts herangezogen, womit in weiterer Folge die Beschaffenheit des Schüttguts bestimmt werden kann. Die Tiefendaten werden wiederum durch einen Abgleich von korrespondierenden Musterpunkten erzeugt. Als Abweichung kann in diesem Fall die Anzahl oder der Anteil an fehlenden Tiefendaten herangezogen werden.

Während die Bestimmung der Abweichung zwischen dem Istwert und einem hinterlegten Sollwert eines Musters äußerst sensitiv ist, erweist sich die Bestimmung der Abweichung zwischen dem vom ersten Sensor erfassten Istwert und dem vom zweiten Sensor erfassten Sollwert als besonders robustes Verfahren, da dieses Verfahren weitgehend unabhängig von den Lichtverhältnissen im Erfassungsbereich ist. Um die Vorteile beider Möglichkeiten zu kombinieren, können als Sensoren eine optische Kamera und eine Stereokamera vorgesehen sein.

Damit das Verfahren mithilfe von materialspezifischen Daten des Schüttguts weiterhin hinsichtlich der Ressourcenschonung verbessert werden kann, ohne den Mess- bzw. Konstruktionsaufwand zu erhöhen, wird vorgeschlagen, dass mit der Stereokamera ein zweidimensionales Tiefenbild von an der Stereokamera vorbeigefördertem Schüttgut erzeugt und einem vorab trainierten, faltenden neuronalen Netzwerk zugeführt wird, das wenigstens drei hintereinanderliegende Faltungsebenen und je Klasse einer Korngrößenverteilung einen nachgelagerten Mengenklassifizierer aufweist, deren Ausgangswerte als Korngrößenverteilung ausgegeben werden. Die Information der ermittelten Korngrößenverteilung kann zur Regelung der Staubniederhaltung eingesetzt werden. Ist die Korngrößenverteilung in Richtung kleiner Korngrößen verschoben, so kann in Kombination mit beispielsweise einem erhöhten Leistungsbedarf des Brechers auf einen intensiven Zerkleinerungsprozess und damit auf eine erhöhte Staubbelastung geschlossen werden, wodurch die Menge des versprühten Bindemittels zur Staubniederhaltung erhöht werden kann. Die Korngrößenverteilung ist dabei ein Histogramm, das entweder mit absoluten Mengenwerten oder aber mit auf das Schüttgutvolumen bezogenen relativen Mengenwerten gebildet werden kann und liefert damit wichtige Rückschlüsse, beispielsweise auf den Brechspalt, etwaige Störungen oder andere Prozessparameter eines Brechers. Somit kann durch die erfindungsgemäßen Maßnahmen die herkömmlicherweise nur sehr aufwändig bestimmbare Siebkurve von Brechern mit hohen Geschwindigkeiten automatisiert erfasst werden, da keine Parameter für einzelne Körner erfasst und daraus relevante Größen berechnet werden müssen. Die Bestimmung der Korngrößenverteilung direkt aus dem Tiefenbild verringert dadurch auch die Fehleranfälligkeit beim Bestimmen der Korngrößenverteilung. Um Schwankungen bei der Erfassung der Korngrößenverteilung auszugleichen und fehlerhafte Ausgabewerte des neuronalen Netzwerkes zu kompensieren, können darüber hinaus mehrere aufeinanderfolgende Ausgangswerte gemittelt und der Mittelwert als Korngrößenverteilung des im Erfassungsbereich vorhandenen Schüttguts ausgegeben werden.

Das Training des neuronalen Netzwerks erfordert große Mengen an Trainingstiefenbildern, die das zu erfassende Schüttgut möglichst exakt repräsentieren. Der Arbeitsaufwand um die notwendige Menge an Schüttgut zu vermessen ist allerdings extrem hoch. Um dem neuronalen Netz dennoch ausreichende Trainingstiefenbilder zur Verfügung zu stellen, um das Schüttgutvolumen zu bestimmen, wird vorgeschlagen, zunächst Beispieltiefenbilder je eines Beispielkornes mit bekanntem Volumen erfasst und gemeinsam mit dem Volumen abgespeichert werden, wonach mehrere Beispieltiefenbilder zufällig zu einem Trainingstiefenbild zusammengesetzt werden, dem als Schüttgutvolumen die Summe der Volumina der zusammengesetzten Beispieltiefenbilder und / oder als Korngrößenverteilung die klassenweise Verteilung der Schüttgutvolumina der zusammengesetzten Beispieltiefenbilder zugeordnet wird, wonach das Trainingstiefenbild eingangsseitig und das zugeordnete Schüttgutvolumen und / oder die zugeordnete Korngrößenverteilung ausgangsseitig dem neuronalen Netzwerk zugeführt und die Gewichte der einzelnen Netzwerkknoten in einem Lernschritt angepasst werden. Der Trainingsmethode liegt also die Überlegung zugrunde, dass durch die Kombination von Beispieltiefenbildern vermessener Schüttgutkörner mannigfaltige Kombinationen an Trainingstiefenbildern erstellt werden können. Es genügt also, Beispieltiefenbilder verhältnismäßig weniger Schüttgutkörner mit ihrem Volumen zu erfassen, um eine große Anzahl an Trainingstiefenbildern zu generieren, mit denen das neuronale Netzwerk trainiert werden kann. Zum Training des neuronalen Netzwerks werden in den einzelnen Trainingsschritten in bekannter Weise die Gewichte zwischen den einzelnen Netzwerkknoten so angepasst, dass der tatsächliche Ausgabewert dem vorgegebenen Ausgabewert am Ende des neuronalen Netzwerks ehestmöglich entspricht. Dabei können an den Netzwerkknoten unterschiedliche Aktivierungsfunktionen vorgegeben werden, die dafür maßgeblich sind, ob ein am Netzwerkknoten anliegender Summenwert an die nächste Ebene des neuronalen Netzwerks weitergegeben wird. Analog zum Volumen können den Beispieltiefenbildern auch andere Parameter, wie beispielsweise die Korngrößenverteilung der im Beispieltiefenbild abgebildeten Körner zugewiesen werden. Zur Tiefenbildverarbeitung wird auch hier vorgeschlagen, dass aus dem Tiefenbild die Werte jener Bildpunkte entfernt werden, deren Tiefe einem vorab erfassten Abstand zwischen der Stereokamera und dem Hintergrund für diesen Bildpunkt entspricht oder diesen Abstand überschreitet. Dadurch weisen die Trainingstiefenbilder und die Tiefenbilder des gemessenen Materials nur die für die Vermessung relevanten Informationen auf, wodurch ein stabileres Trainingsverhalten erreicht und die Erkennungsrate bei der Anwendung erhöht wird. Über die Auswahl der Beispiel- bzw. der aus ihnen zusammengesetzten Trainingstiefenbilder kann das neuronale Netz auf beliebige Arten von Schüttgut trainiert werden.

Das Trainieren des neuronalen Netzwerks wird erschwert und die Messgenauigkeit nimmt im laufenden Betrieb ab, wenn schüttgutfremde Elemente im Erfassungsbereich der Stereokamera liegen. Dazu zählen beispielsweise vibrierende Bauteile eines Förderbandes selbst, oder aber andere Maschinenelemente. Zur Vermeidung der daraus entstehenden Störungen wird vorgeschlagen, dass aus dem Tiefenbild die Werte jener Bildpunkte entfernt werden, deren Tiefe einem vorab erfassten Abstand zwischen Stereokamera und einem Hintergrund für diesen Bildpunkt entspricht oder diesen Abstand überschreitet. Dadurch können störende Bildinformationen, hervorgerufen beispielsweise durch Vibrationen des Förderbandes, entfernt und sowohl die Tiefenbilder als auch die Trainingstiefenbilder auf die für die Vermessung relevanten Informationen beschränkt werden.

Häufig tritt das Problem auf, dass das durch das Bindemittel benetzte Schüttgut aufgrund der zusätzlichen Masse des Bindemittels zu verfälschten Wiegewerten führt. Um daher eine valide Bestimmung der Beschaffenheit, insbesondere der Masse, des benetzten Schüttguts zu ermöglichen, ohne das Schüttgut vorher einem Trocknungsprozess aussetzen zu müssen, wird vorgeschlagen, dass den Faltungsebenen ein Volumenklassifizierer nachgelagert ist und dass der Ausgangswert des Volumenklassifzierers als das im Erfassungsbereich vorhandene Schüttgutvolumen ausgegeben wird. Zufolge dieser Maßnahmen kann also die Masse des Schüttguts bei bekannter Dichte des trockenen Schüttguts bestimmt werden, da das Bindemittel keinen Beitrag zum bestimmten Volumen des Schüttguts leistet. Hierfür ist keine Waage nötig, sondern lediglich die für die Bestimmung des Volumens des Schüttguts herangezogene Stereokamera, die ohnehin zur Steuerung der Staubniederhaltung eingesetzt wird. Dabei liegt die Überlegung zugrunde, dass bei der Verwendung von zweidimensionalen Tiefenbildern die zur Volumenbestimmung notwendige Information aus den Tiefeninformationen extrahiert werden kann, nachdem ein hierfür eingesetztes neuronales Netzwerk mit Trainingstiefenbildern mit bekanntem Schüttgutvolumen trainiert wurde. Die Faltungsebenen reduzieren dabei die Eingangstiefenbilder zu einer Reihe von Einzelmerkmalen, die wiederum vom nachgelagerten Volumenklassifizierer bewertet werden, sodass im Ergebnis das Gesamtvolumen des im Eingangstiefenbild abgebildeten Schüttguts ermittelt werden kann. Das Volumen muss daher nicht mehr für jedes einzelne Korn berechnet werden. Da im Tiefenbild je Bildpunkt der Abstand des abgebildeten Schüttguts zur Stereokamera mit nur einem Wert abgebildet wird, kann im Gegensatz zur Verarbeitung von Farbbildern die zu verarbeitende Datenmenge reduziert, das Messverfahren beschleunigt und der für das neuronale Netzwerk erforderliche Speicherbedarf verringert werden. Dadurch kann das neuronale Netzwerk auf günstigen KI-Parallelrecheneinheiten mit GPU-Unterstützung implementiert und das Verfahren unabhängig von der Farbe des Schüttgutes eingesetzt werden. Auch kann das Schüttgutvolumen durch die Beschleunigung des Messverfahrens selbst bei Förderbandgeschwindigkeiten von 3m/s, bevorzugter Weise 4m/s, bestimmt werden. Die genannte Reduktion der Datenmenge im Tiefenbild und damit im neuronalen Netzwerk senkt zusätzlich die Fehleranfälligkeit für die korrekte Bestimmung des Schüttgutvolumens. Die Verwendung von Tiefenbildern hat im Gegensatz zu Farb- oder Graustufenbildern den zusätzlichen Vorteil, dass das Messverfahren weitgehend unabhängig von sich ändernden Belichtungsbedingungen ist. Als neuronales Netzwerk kann beispielsweise ein üblicherweise nur für Farbbilder verwendetes vgg16 Netzwerk (Simonyan / Zisserman, Very Deep Convolutional Networks for Large-Scale Image Recognition, 2015) zum Einsatz kommen, das lediglich auf einen Kanal, nämlich für die Werte der Tiefenbildpunkte, reduziert ist. Um Schwankungen bei der Erfassung des Volumens auszugleichen und fehlerhafte Ausgabewerte des neuronalen Netzwerkes zu kompensieren, können darüber hinaus mehrere aufeinanderfolgende Ausgangswerte gemittelt und der Mittelwert als das im Erfassungsbereich vorhandene Schüttgutvolumen ausgegeben werden.

Um das Trainingsverhalten und die Erkennungsrate weiter zu verbessern, wird vorgeschlagen, dass die Beispieltiefenbilder mit zufälliger Ausrichtung zu einem Trainingstiefenbild zusammengesetzt werden. Dadurch wird bei gegebener Anzahl an Schüttgutkörnern pro Beispieltiefenbild die Anzahl an möglichen Anordnungen der Schüttgutkörner deutlich erhöht, ohne dass mehr Beispieltiefenbilder generiert werden müssen und eine Überanpassung des neuronalen Netzwerks wird vermieden.

Eine Vereinzelung der Schüttgutkörner des Schüttguts kann entfallen und größere Schüttgutvolumina können bei gleichbleibender Fördergeschwindigkeit des Förderbandes bestimmt werden, wenn die Beispieltiefenbilder mit teilweisen Überlappungen zu einem Trainingstiefenbild zusammengesetzt werden, wobei der Tiefenwert des Trainingstiefenbilds im Überlappungsbereich der geringsten Tiefe beider Beispieltiefenbilder entspricht. Um realistische Schüttgutverteilungen zu erfassen, müssen die Fälle berücksichtigt werden, in denen zwei Schüttgutkörner aufeinander zu liegen kommen. Das neuronale Netzwerk kann dahingehend trainiert werden, dass es solche Überlappungen erkennt, und das Volumen der Schüttgutkörner trotzdem ermitteln kann.

### Kurze Beschreibung der Erfindung

In der Zeichnung ist der Erfindungsgegenstand beispielsweise dargestellt. Es zeigen
- Fig. 1: eine Seitenansicht eines mobilen Brechers, an dem das erfindungsgemäße Verfahren angewandt wird und
- Fig. 2: eine schematische Darstellung eines Abgleichs korrespondierender Musterpunkte von Schüttgut durch eine Stereokamera.

### Wege zur Ausführung der Erfindung

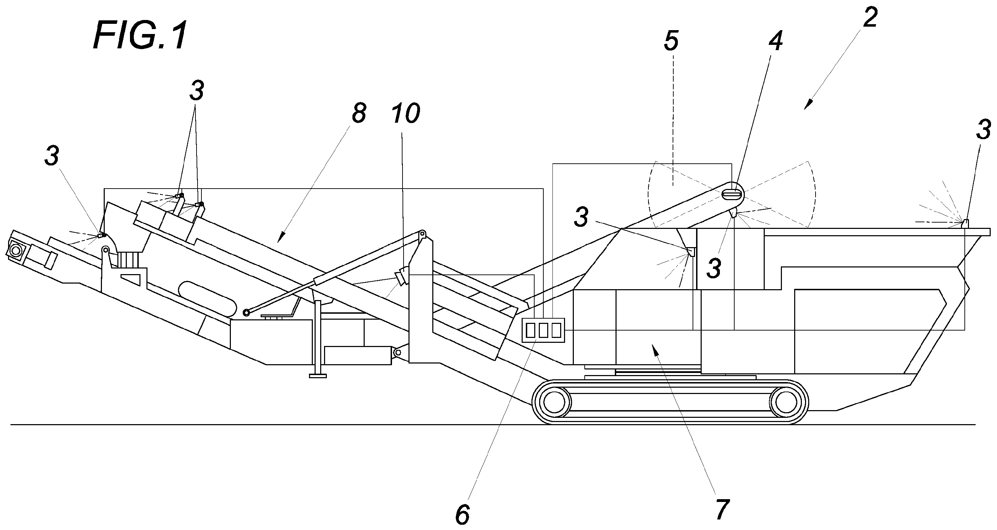

Ein erfindungsgemäßes Verfahren kann beispielsweise zur Staubniederhaltung von beim Zerkleinern von Schüttgut 1 entstehenden Staubpartikeln eingesetzt werden. Hierzu weist ein dafür eingesetzter und in der Fig. 1 dargestellter mobiler Brecher 2 Sprüheinrichtungen 3 auf. Um eine ressourcenschonende Staubniederhaltung zu ermöglichen, werden die Sprüheinrichtungen 3 nur im Falle einer erhöhten Staubbelastung aktiviert. Die Beurteilung, ob eine erhöhte Staubbelastung vorliegt, erfolgt dabei über einen ersten Sensor 4, welcher ein in dessen Erfassungsbereich 5 angeordnetes Muster erfasst und das Abbild des Musters als Istwert mit einem auf einer Steuereinheit 6 hinterlegten Sollwert vergleicht. Wird eine einen bestimmten Schwellwert überschreitende Abweichung zwischen dem Istwert und dem Sollwert des Musters festgestellt, so werden nur die diesem Muster zugeordneten Sprüheinrichtungen 3 aktiviert. Die Sprüheinrichtungen 3 geben in weiterer Folge bis zu deren Deaktivierung ein Bindemittel zum Binden der Staubpartikel ab. Um eine möglichst differenzierte Aktivierung der Sprüheinrichtungen 3 zu ermöglichen, können mehrere Muster an repräsentativen Stellen des Brechers angeordnet sein. Solche Stellen können zwar nicht in der Brechkammer 7, aber am Anfang bzw. Ende des Förderbandes 8 oder an Stellen, welche zur optischen Beurteilung der Beschaffenheit des Schüttguts 1 nötig sind, vorgesehen sein. Die Zuordnung der Sprüheinrichtungen 3 zu den Mustern kann in Abhängigkeit der Entfernung der Sprüheinrichtungen 3 zu den Mustern erfolgen, sodass eine einen Schwellwert überschreitende Abweichung eines bestimmten Musters nächstgelegene Sprüheinrichtung 3 aktiviert wird. Es ist jedoch auch denkbar, dass die Sprüheinrichtungen 3 und der erste Sensor 4 mit einer Steuereinrichtung 6 verbunden sind, die die Regelung der Staubniederhaltung durch eine Parametervariation, beispielsweise eine variierende Zuordnung der Sprüheinrichtungen 3 zu einem bestimmten Muster oder durch die Sprüheinrichtungen 3 abgegebene variierende Bindemittelmengen, laufend optimieren kann. Grundsätzlich sind die Sprüheinrichtungen 3 so am Brecher 2 angeordnet, dass diese vor allem in den relevanten Bereichen erhöhter Staubbelastung eine umfassende Staubniederhaltung ermöglichen.

Damit der Mess- und Wartungsaufwand reduziert werden kann, können im Erfassungsbereich 5 des ersten Sensors 4 mehrere Muster angeordnet sein. Dadurch kann mit nur einem optischen Sensor 4 eine Vielzahl an Mustern erfasst werden, wodurch eine differenzierte und damit effiziente Aktivierung der an unterschiedlichen Positionen angeordneten Sprüheinrichtungen 2 ermöglicht wird. Als erster Sensor 4 ist hierfür beispielsweise eine Weitwinkel- bzw. 360°-Kamera geeignet.

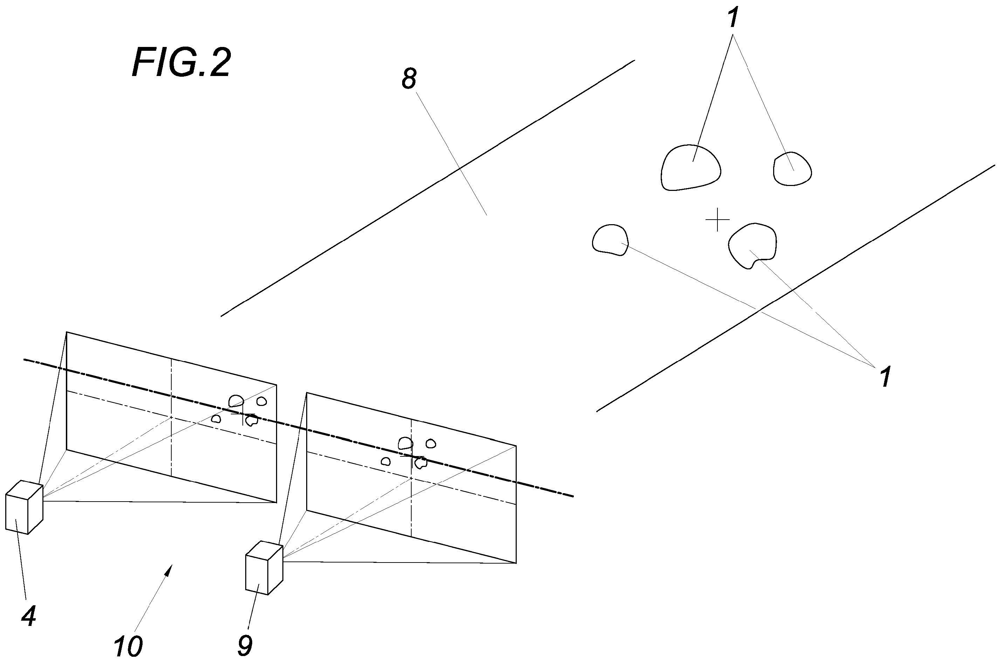

Fig. 2 zeigt die Möglichkeit, dass auch das Schüttgut 1 selbst als Muster zur Beurteilung der vorherrschenden Staubbelastung eingesetzt werden kann. Dies wird dadurch ermöglicht, indem das von einem zweiten Sensor 9 aufgenommene Abbild des Schüttguts 1 als Sollwert dient. Der Sollwert ist daher nicht fest auf einer Steuereinheit 6 hinterlegt, sondern wird laufend neu aufgenommen. Die Abweichung zwischen dem vom ersten Sensor 4 aufgenommenen Istwert und dem vom zweiten Sensor 9 aufgenommenen Sollwert entspricht dabei der Anzahl an nicht korrespondierenden Musterpunkten zwischen Ist- und Sollwert.

Der erste Sensor 4 und der zweite Sensor 9 können eine Stereokamera 10 bilden, wodurch neben der Erkennung der Staubbelastung im Bereich der Stereokamera 10 auch Information über die Tiefendaten erfasst werden können, womit in weiterer Folge die Beschaffenheit des Schüttguts 1 beurteilt werden kann.

Wie in der Fig. 1 offenbart wird, können als Sensoren sowohl eine optische Kamera 4 als auch eine Stereokamera 10 vorgesehen sein.

## Patentansprüche

1. Verfahren zur Staubniederhaltung bei Brechern (2) mit Sprüheinrichtungen (3), **dadurch gekennzeichnet, dass** die Abweichung zwischen einem von einem ersten Sensor (4) aufgenommenen Abbild eines in seinem Erfassungsbereich angeordneten Musters als Istwert und einem vorgegebenen Sollwert ermittelt wird, wonach beim Überschreiten der Abweichung über einen vorgegebenen Schwellwert die dem Muster zugeordneten Sprüheinrichtungen (3) aktiviert werden.

2. Verfahren nach Anspruch 1, **dadurch gekennzeichnet, dass** vom ersten Sensor (4) Abbilder von mehreren Mustern gleichzeitig erfasst werden.

3. Verfahren nach Anspruch 1 oder 2, **dadurch gekennzeichnet, dass** das Abbild des von einem zweiten Sensor (9) aufgenommenen Musters den Sollwert bildet und dass die Abweichung als Anzahl der nichtkorrespondierenden Musterpunkte im Soll und Istwert ermittelt wird.

4. Verfahren nach Anspruch 3, **dadurch gekennzeichnet, dass** der erste (4) und zweite Sensor (9) eine Stereokamera (10) bilden.

5. Verfahren nach Anspruch 4, **dadurch gekennzeichnet, dass** mit der Stereokamera (10) ein zweidimensionales Tiefenbild von an der Stereokamera (10) vorbeigefördertem Schüttgut (1) erzeugt und einem vorab trainierten, faltenden neuronalen Netzwerk zugeführt wird, das wenigstens drei hintereinanderliegende Faltungsebenen und je Klasse einer Korngrößenverteilung einen nachgelagerten Mengenklassifizierer aufweist, deren Ausgangswerte als Korngrößenverteilung ausgegeben werden.

6. Verfahren nach Anspruch 5, **dadurch gekennzeichnet, dass** aus dem Tiefenbild die Werte jener Bildpunkte entfernt werden, deren Tiefe einem vorab erfassten Abstand zwischen Stereokamera (10) und einem Hintergrund für diesen Bildpunkt entspricht oder diesen Abstand überschreitet.

7. Verfahren nach Anspruch 5 oder 6, **dadurch gekennzeichnet, dass** den Faltungsebenen ein Volumenklassifizierer nachgelagert ist und dass der Ausgangswert des Volumenklassifzierers als das im Erfassungsbereich vorhandene Schüttgutvolumen ausgegeben wird.

8. Verfahren nach Anspruch 5 bis 7, **dadurch gekennzeichnet, dass** zum Trainieren des neuronalen Netzwerks zunächst Beispieltiefenbilder je eines Beispielkornes mit bekanntem Volumen erfasst und gemeinsam mit dem Volumen abgespeichert werden, wonach mehrere Beispieltiefenbilder zufällig zu einem Trainingstiefenbild zusammengesetzt werden, dem als Schüttgutvolumen die Summe der Volumina der zusammengesetzten Beispieltiefenbilder und / oder als Korngrößenverteilung die klassenweise Verteilung der Schüttgutvolumina der zusammengesetzten Beispieltiefenbilder zugeordnet wird, wonach das Trainingstiefenbild eingangsseitig und das zugeordnete Schüttgutvolumen und / oder die zugeordnete Korngrößenverteilung ausgangsseitig dem neuronalen Netzwerk zugeführt und die Gewichte der einzelnen Netzwerkknoten in einem Lernschritt angepasst werden.

## Claims

1. Method of dust suppression for crushers (2) with spraying devices (3), **characterized in that** an image, recorded by a first sensor (4), of a pattern arranged in its detection region serves as an actual value, and that the deviation between the actual value and a specified target value is determined, whereupon, when the deviation exceeds a specified threshold value, the spraying devices (3) associated with the pattern are activated.

2. Method according to claim 1, **characterized in that** images of several patterns are detected simultaneously by the first sensor (4).

3. Method according to claim 1 or 2, **characterized in that** the image of the pattern recorded by a second sensor (9) forms the target value, and **in that** the deviation is determined as the number of non-corresponding pattern points in the target and actual value.

4. Method according to claim 3, **characterized in that** the first (4) and second sensor (9) form a stereo camera (10).

5. Method according to claim 4, **characterized in that** a two-dimensional depth image of bulk material (1) conveyed past the stereo camera (10) is generated with the stereo camera (10) and is fed to a previously trained convolutional neural network which has at least three convolution layers arranged one behind the other and, for each class of a particle size distribution, a downstream quantity classifier whose output values are output as a particle size distribution.

6. Method according to claim 5, **characterized in that** the values of those pixels are removed from the depth image whose depth corresponds to a previously detected distance between stereo camera (10) and a background for this pixel or exceeds this distance.

7. Method according to claim 5 or 6, **characterized in that** a volume classifier is arranged downstream of the convolution layers, and **in that** the output value of the volume classifier is output as the bulk material volume present in the detection region.

8. Method according to one of claims 5 to 7, **characterized in that** for training the neural network firstly example depth images of a respective example grain with a known volume are acquired and stored together with the volume, whereupon a plurality of example depth images are randomly combined to form a training depth image, to which the sum of the volumes of the composite example depth images is assigned as bulk material volume and/or the class-wise distribution of the bulk material volumes of the composite example depth images is assigned as particle size distribution, whereupon the training depth image is fed to the neural network on the input side and the assigned bulk material volume and/or the assigned particle size distribution is fed to the neural network on the output side, and the weights of the individual network nodes are adapted in a learning step.

## Revendications

1. Procédé pour réduire la poussière dans les concasseurs (2) équipés de dispositifs de pulvérisation (3), **caractérisé en ce que** l'écart entre une image enregistrée par un premier capteur (4) d'un motif disposé dans sa zone de détection en tant que valeur réelle et une valeur de consigne prédéfinie est déterminé, après quoi, lorsque l'écart dépasse une valeur seuil prédéfinie, les dispositifs de pulvérisation (3) associés au motif sont activés.

2. Procédé selon la revendication 1, **caractérisé en ce que** le premier capteur (4) détecte simultanément les images de plusieurs motifs.

3. Procédé selon la revendication 1 ou la revendication 2, **caractérisé en ce que** l'image du motif enregistrée par un deuxième capteur (9) constitue la valeur de consigne et **en ce que** l'écart est déterminé comme étant le nombre de points de motif non correspondants dans la valeur de consigne et la valeur réelle.

4. Procédé selon la revendication 3, **caractérisé en ce que** le premier (4) et le deuxième (9) capteurs forment une caméra stéréoscopique (10).

5. Procédé selon la revendication 4, **caractérisé en ce qu'**une image en profondeur bidimensionnelle du produit en vrac (1) transporté devant la caméra stéréoscopique (10) est générée à l'aide de la caméra stéréoscopique (10) et transmise à un réseau neuronal convolutif préalablement entraîné, qui comporte au moins trois niveaux de convolution successifs et, pour chaque classe de distribution granulométrique, un classificateur de quantités en aval, dont les valeurs de sortie sont éditées sous forme de distribution granulométrique.

6. Procédé selon la revendication 5, **caractérisé en ce que** les valeurs des points d'image, dont la profondeur correspond à ou dépasse une distance préalablement enregistrée entre la caméra stéréoscopique (10) et un arrière-plan pour ce point d'image, sont supprimées de l'image en profondeur.

7. Procédé selon la revendication 5 ou 6, **caractérisé en ce qu'**un classificateur de volume est monté en aval des plans de convolution et **en ce que** la valeur de sortie du classificateur de volume est émise sous forme de volume de matière en vrac présent dans la zone de détection.

8. Procédé selon les revendications 5 à 7, **caractérisé en ce que**, pour entraîner le réseau neuronal, des exemples d'images de profondeur d'un exemple de grain avec un volume connu sont d'abord enregistrées et stockées avec le volume, après quoi plusieurs exemples d'images de profondeur sont assemblées de manière aléatoire pour former une image de profondeur d'entraînement, à laquelle est attribuée comme volume de matière en vrac la somme des volumes des exemples d'images de profondeur assemblées et / ou, comme distribution granulométrique, la distribution par classe des volumes de matière en vrac des exemples d'images de profondeur assemblées, après quoi l'image de profondeur d'entraînement est fournie au réseau neuronal côté entrée et le volume de matière en vrac attribué et/ou la distribution granulométrique attribuée sont fournis côté sortie, et les poids des différents nœuds du réseau sont ajustés au cours d'une étape d'apprentissage.
